# DEMANDE DE BREVET EUROPEEN

(11) **EP 3 113 103 A1**
(43) Date de publication de la demande: **04.01.2017**
(21) Numéro de dépôt: 16175818.0
(22) Date de dépôt: 22.06.2016
(51) Int. Cl.: G06T 3/00, G06T 5/50

(54) **BLOC CAMERA HAUTE RESOLUTION POUR DRONE, AVEC CORRECTION DES DISTORSIONS DE TYPE WOBBLE**

(30) Priorité: 30.06.2015 FR 1556105
(71) Demandeur: Parrot Drones, 75010 Paris (FR)
(72) Inventeur: SRON, Eng Hong, 75019 PARIS (FR)
(74) Mandataire: Dupuis-Latour, Dominique

(57) **Abrégé**

Ce bloc caméra (14) comprend une caméra *rolling shutter* haute résolution (16) et une ou plusieurs caméras *global shutter* basse résolution (18), par exemple des caméras spectrales monochromes. Toutes les caméras sont orientées dans la même direction et sont déclenchables ensemble pour recueillir simultanément une image haute résolution (I₀) et au moins une image basse résolution (I₁-I₄) d'une même scène vue par le drone. Des moyens de traitement d'image (22) déterminent les déformations de type *wobble* présentes dans l'image haute résolution et absentes des images basse résolution, et combinent l'image haute résolution (I₀) et les images basse résolution (I₁-I₄) pour délivrer en sortie une image haute résolution (I'₀) corrigée de ces déformations.

## Description

L'invention concerne le traitement des images numériques captées par une caméra embarquée dans un appareil mobile, en particulier un engin volant motorisé tel qu'un drone.

L'invention s'applique avantageusement aux images recueillies par la caméra d'un drone à voilure fixe, notamment de type aile volante tel que le modèle *eBee* de SenseFly, Cheseaux-Lausanne, Suisse, qui est un drone de cartographie professionnelle de terrain, utilisé notamment en agronomie pour le suivi des cultures agricoles.

L'invention s'applique également à d'autres types de drones, par exemple les drones à voilure tournante tels que les quadricoptères, dont un exemple typique est le *Bebop Drone* de Parrot SA, Paris, France, qui est équipé, outre une caméra frontale, d'une caméra à visée verticale recueillant une image du terrain survolé par le drone.

Pour obtenir une représentation cartographique fine du terrain survolé, la caméra utilisée par le drone est une caméra produisant une image couleur RVB haute définition (typiquement au moins 12 Mpixel, pouvant atteindre 20, voire 40 Mpixel).

Les caméras capables de répondre à ces spécifications sont des caméras dotées d'un capteur de type *rolling shutter*, qui est un capteur dans lequel les pixels du capteur sont lus ligne à ligne, l'exposition des photosites et la lecture des lignes successives du capteur ayant lieu concurremment.

Il existe un autre type de capteur, dit *"global shutter*" qui opère en deux étapes distinctes, avec une phase initiale d'exposition des photosites du capteur suivie d'une phase de lecture globale des données de pixel après que les photosites ont été exposés.

L'un des inconvénients des capteurs *global shutter* est leur définition relativement faible, très inférieure à celle des capteurs *rolling shutter* (ou sinon avec un cout prohibitif), ainsi que leur sensibilité moindre car pendant toute la durée de la phase de lecture les photosites ne sont pas exposés, à la différence d'un capteur *rolling shutter* où les photosites sont exposés beaucoup plus longtemps, même pendant la lecture ligne par ligne.

En revanche, les capteurs *rolling shutter* présentent un inconvénient majeur qui est celui des déformations subies par l'image du fait de phénomènes externes. En effet, avec un capteur *rolling shutter* la scène n'est pas globalement "gelée", mais les lignes constituant l'image n'étant pas acquises en même temps pour tous les pixels de l'image, les mouvements divers se produisant pendant la capture d'une image génèrent au sein de celle-ci des déformations qui ne sont pas les mêmes d'une ligne à la suivante.

En particulier, les changements d'attitude du drone ainsi que les vibrations des moteurs, etc., se produisant pendant la capture d'une image génèrent un défaut bien connu, dénommé *wobble,* qui est un effet de flou et de distorsion de l'image, où des éléments rectilignes de la scène sont typiquement restitués dans l'image délivrée en sortie du capteur sous la forme d'une ligne ondulée.

Lorsque l'effet *wobble* résulte de changements d'attitude du drone, il est possible de corriger efficacement ce défaut en utilisant les mesures de la centrale inertielle du drone, qui délivre des signaux représentatifs des rotations instantanées du drone, et donc de la caméra, dans les trois axes de tangage, de roulis et de lacet. Dès lors que l'attitude du drone peut être acquise de façon précise pour chacune des lignes en synchronisme avec le capteur de la caméra, l'application d'une transformée inverse de la mesure gyrométrique permet de compenser en temps réel les déformations de l'image. Une technique de ce type est notamment décrite dans le EP 2 933 775 A1 (publié le 21 octobre 2015, correspondant à la demande française FR 14 56302 du 2 juillet 2014 pour *"Drone à voilure tournante muni d'une caméra vidéo délivrant des séquences d'images stabilisées*"), au nom de la demanderesse.

Cette technique de correction permet surtout d'éliminer le *wobble* dû aux rotations, artefact typique des drones à voilure tournante tels que les quadricoptères.

Dans le cas des drones à voilure fixe, par exemple ceux du type "aile volante", ce type de correction est peu efficace, surtout lorsque le drone se déplace rapidement par rapport à la scène captée. En effet, le principe de fonctionnement ligne par ligne du capteur *rolling shutter* y induit des déformations complexes difficilement prévisibles, dépendant de la vitesse et de la structure de la scène captée.

De fait, aucun des deux types de capteur ne donne réellement satisfaction : une caméra équipée d'un capteur *rolling shutter* produira une image de haute définition, mais sujette à des déformations multiples et imprévisibles, tandis qu'une caméra équipée d'un capteur *global shutter* produira une image dépourvue de déformations (la scène captée étant celle qui a été "gelée" à la fin de la phase d'exposition, juste avant le début de la phase de lecture), mais avec une résolution bien inférieure et également une sensibilité moindre.

Le but de l'invention est de proposer un nouveau type de bloc de caméra qui combine les avantages respectifs des deux capteurs *global shutter* et *rolling shutter*, mais sans leurs inconvénients, à savoir un bloc-caméra qui présente les avantages suivants :
- haute résolution et sensibilité élevée (avantage typique d'un capteur *rolling shutter* conventionnel) ;
- absence de distorsions de l'image, notamment d'effet *wobble* (avantage propre aux capteurs *global shutter*) ; et
- le tout réalisé à partir de composants courants de grande diffusion, de cout raisonnable.

Le point de départ de l'invention est la constatation que certains drones embarquent un bloc-caméra incorporant dans une même unité des caméras pourvues des deux types de capteurs.

Tel est le cas en particulier des drones utilisés en cartographie professionnelle, par exemple pour le contrôle des cultures, de l'hydrographie, etc., qui sont pourvus à la fois d'une caméra principale de type *rolling shutter* donnant une image RVB haute résolution du terrain survolé, et au moins une (généralement plusieurs) caméra monochrome à bande étroite pour l'analyse spectrale du terrain survolé. Ces caméras spectrales mesurent en particulier dans différentes bandes la réflectance des cultures, c'est-à-dire la quantité de lumière réfléchie par les feuilles, afin d'obtenir des renseignements sur l'état de la photosynthèse.

Ces caméras spectrales sont des caméras *global shutter* monochromes et à relativement basse résolution (typiquement de l'ordre de 1 Mpixel) opérant sur une bande étroite du spectre (vert, rouge, proche infrarouge, etc.) et ne procurant pas une qualité d'image exploitable telle quelle à d'autres fins que l'analyse spectrale.

L'idée de base de l'invention consiste à utiliser la ou les images délivrées par les caméras spectrales (images basse définition, monochromes, mais dépourvues de distorsions du fait du principe de fonctionnement de leur capteur *global shutter*) pour corriger les déformations de l'image de la caméra principale *rolling shutter* (qui est une caméra donnant des images de haute définition, RVB, mais sujette aux distorsions que l'on a expliquées plus haut).

Plus précisément, l'invention propose un bloc caméra comprenant, de manière en elle-même connue une caméra de type *rolling shutter* comportant un capteur numérique à une première résolution, haute résolution, et au moins une caméra de type *global shutter* comportant un capteur numérique à une seconde résolution, basse résolution, moindre que ladite première résolution. La caméra *rolling shutter* et la au moins une caméra glo*bal shutter* ont leurs axes optiques orientés dans la même direction et sont déclenchables ensemble de manière à recueillir simultanément une image haute résolution et au moins une image basse résolution d'une même scène vue par le drone.

De façon caractéristique de l'invention, le bloc caméra comprend également des moyens de traitement d'image, aptes à : déterminer des déformations de type *wobble* présentes dans l'image haute résolution et absentes de la au moins une image basse résolution ; et combiner l'image haute résolution et la au moins une image basse résolution pour délivrer en sortie une image haute résolution corrigée desdites déformations.

Dans un premier mode de réalisation, les moyens de traitement d'image comprennent des moyens aptes à :
rechercher des points d'intérêt dans l'image haute résolution et dans la au moins une image basse résolution ;
mettre en correspondance respective les points d'intérêt de l'image haute résolution et ceux de la au moins une image basse résolution ;
· calculer les déplacements respectifs des points d'intérêt de l'image haute résolution par rapport aux points d'intérêt correspondants de la au moins une image basse résolution ;
· déterminer une transformation définie par l'ensemble desdits déplacements ; et
· appliquer à l'image haute résolution une transformation inverse de ladite transformation.

Dans un second mode de réalisation, les moyens de traitement d'image comprennent des moyens aptes à :
- construire une représentation de la scène à partir de la au moins une image basse résolution ;
- déterminer les mouvements du bloc caméra subis pendant la durée du recueil de l'image haute résolution, à partir de signaux délivrés par des capteurs gyrométriques, accélérométriques et/ou de géolocalisation du drone ; et
- projeter point par point, en tenant compte desdits mouvements, chaque pixel de l'image haute résolution en tant que texture sur ladite représentation de la scène construite à partir de la au moins une image basse résolution.

Selon diverses caractéristiques subsidiaires avantageuses :
- la caméra *rolling shutter* est une caméra RVB ;
- la au moins une caméra *global shutter* est une caméra monochrome ;
- la au moins une caméra *global shutter* est un ensemble de quatre caméras spectrales à bande étroite ;
- la résolution du capteur de la caméra *rolling shutter* est d'au moins 12 Mpixel ;
- la résolution du capteur de la au moins une caméra *global shutter* est d'au moins 1 Mpixel.

L'invention vise également un procédé de traitement d'images, comprenant de manière en elle-même connue :
- l'acquisition d'une image à une première résolution, haute résolution, délivrée par une caméra de type *rolling shutter;*
- l'acquisition d'au moins une image à une seconde résolution, basse résolution, moindre que ladite première résolution, délivrée par au moins une caméra de type *global shutter* respective,
   la caméra *rolling shutter* et la au moins une caméra *global shutter* ayant leurs axes optiques orientés dans la même direction et étant déclenchables ensemble de manière à recueillir simultanément ladite image haute résolution et ladite au moins une image basse résolution d'une même scène vue par le drone.

De façon caractéristique, ce procédé comprend en outre :
- la détermination de déformations de type *wobble* présentes dans l'image haute résolution et absentes de la au moins une image basse résolution ;
- la combinaison de l'image haute résolution et de la au moins une image basse résolution pour délivrer en sortie une image haute résolution corrigée desdites déformations.

Dans une première forme de mise en oeuvre, le procédé comprend des étapes consistant à :
- rechercher des points d'intérêt dans l'image haute résolution et dans la au moins une image basse résolution ;
- mettre en correspondance respective les points d'intérêt de l'image haute résolution et ceux de la au moins une image basse résolution ;
- calculer les déplacements respectifs des points d'intérêt de l'image haute résolution par rapport aux points d'intérêt correspondants de la au moins une image basse résolution ;
- déterminer une transformation définie par à l'ensemble desdits déplacements ; et
- appliquer à l'image haute résolution une transformation inverse de ladite transformation.

Dans une seconde forme de mise en oeuvre, le procédé comprend des étapes consistant à :
- construire une représentation de la scène à partir de la au moins une image basse résolution ;
- déterminer les mouvements du bloc caméra subis pendant la durée du recueil de l'image haute résolution, à partir de signaux délivrés par des capteurs gyrométriques, accélérométriques et/ou de géolocalisation du drone ;
- projeter point par point, en tenant compte desdits mouvements, chaque pixel de l'image haute résolution sur ladite représentation de la scène construite à partir de la au moins une image basse résolution.

On va maintenant décrire un exemple de mise en oeuvre de la présente invention, en référence aux dessins annexés où les mêmes références désignent d'une figure à l'autre des éléments identiques ou fonctionnellement semblables.
La Figure 1 est une vue d'ensemble montrant un drone survolant un terrain dont la scène est captée par une caméra embarquée.
La Figure 2 montre la structure générale d'un bloc-caméra comprenant une caméra *rolling shutter* haute définition et quatre caméras spectrales *global shutter.*
La Figure 3 illustre sous forme de schémas par blocs des différents éléments permettant, à partir d'une pluralité d'images générées par le bloc-caméra de la Figure 2, d'obtenir une image haute résolution dépourvue de déformations.
La Figure 4 est un organigramme illustrant les différentes étapes d'une première forme de mise en oeuvre de l'invention.
La Figure 5 est un schéma illustrant les différentes étapes d'un second mode de mise en oeuvre de l'invention.

On va maintenant décrire des exemples de réalisation et de mise en oeuvre de l'invention.

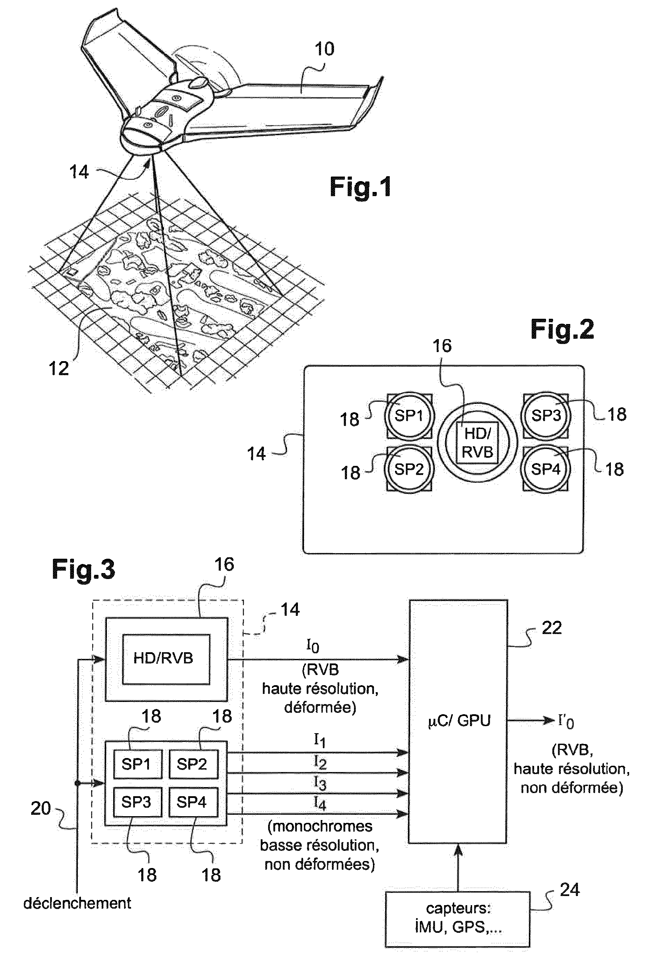

Sur la Figure 1 on a illustré un drone 10, par exemple un drone à voilure fixe de type "aile volante" tel que le *eBee* de SenseFly, survolant un terrain 12 dont le drone va réaliser la cartographie. Pour cela, le drone est pourvu d'un bloc-caméra 14 à visée verticale, tourné vers le terrain de manière à capter l'image d'une scène formée d'une portion approximativement rectangulaire de ce terrain.

La Figure 2 montre plus précisément les différents éléments du bloc-caméra 14 qui, dans cet exemple, comprend un ensemble de cinq caméras 16, 18, dont les axes optiques sont tous orientés dans la même direction, à savoir la direction de la verticale, les cinq caméras délivrant chacune une image approximativement de la même scène 16 survolée par le drone.

Le bloc-caméra 14 comprend une caméra haute définition HD, référencée 16, de type *rolling shutfer*, par exemple de résolution 12 Mpixel ou plus (20 à 40 Mpixel) délivrant une image RVB dans toutes les couleurs du spectre visible.

Le bloc 14 comprend également quatre caméras spectrales SP1 ... SP4, référencées 18, qui sont des caméras monochromes, basse résolution (typiquement 1 Mpixel) de type *global shutter.* Ces quatre caméras 18 sont identiques, à l'exception de la bande du spectre auquel elles sont sensibles. Dans une application à l'agriculture, ces bandes sont par exemple des bandes étroites situées dans : le vert, le rouge, le rouge extrême (*red edge*) et l'infrarouge proche.

Comme illustré Figure 3, les cinq caméras 16 et 18 sont déclenchées simultanément par un signal commun 20, et délivrent respectivement :
- pour la caméra *rolling shutter* 16 : un signal d'image I₀, qui est un signal RVB haute résolution, et
- pour les quatre caméras spectrales *global shutter* 18: des signaux d'image I₁-I₄ respectifs, qui sont des signaux monochromes, basse résolution.

Ces signaux I₀ d'une part et I₁-I₄ d'autre part sont combinés dans une unité 22 permettant, de la manière que l'on va exposer plus bas, d'éliminer les distorsions présentes dans l'image I₀ (distorsions inhérentes à l'utilisation d'une caméra *rolling shutter*) à partir des images I₁-I₄ produites par les caméras spectrales 18 (images qui ne sont pas déformées, du fait de l'utilisation d'un capteur *global shutter,* mais qui sont des images monochromes et en basse résolution).

L'unité 22 peut également recevoir des informations gyrométriques et/ou des informations de géolocalisation (GPS) produites par la centrale inertielle (IMU) du drone ou par des capteurs embarqués (ensemble schématisé par le bloc 24).

Le traitement opéré par le bloc 22 peut être un traitement opéré en temps réel, à la volée, par un microcalculateur ou par une unité de traitement graphique (GPU) dédiée.

Elle peut également être exécutée en post-traitement, le drone enregistrant séparément les images I₀ et I₁-I₄ pour obtention ultérieure de l'image I'₀ débarrassée de ses distorsions.

### Premier mode de mise en oeuvre de l'invention

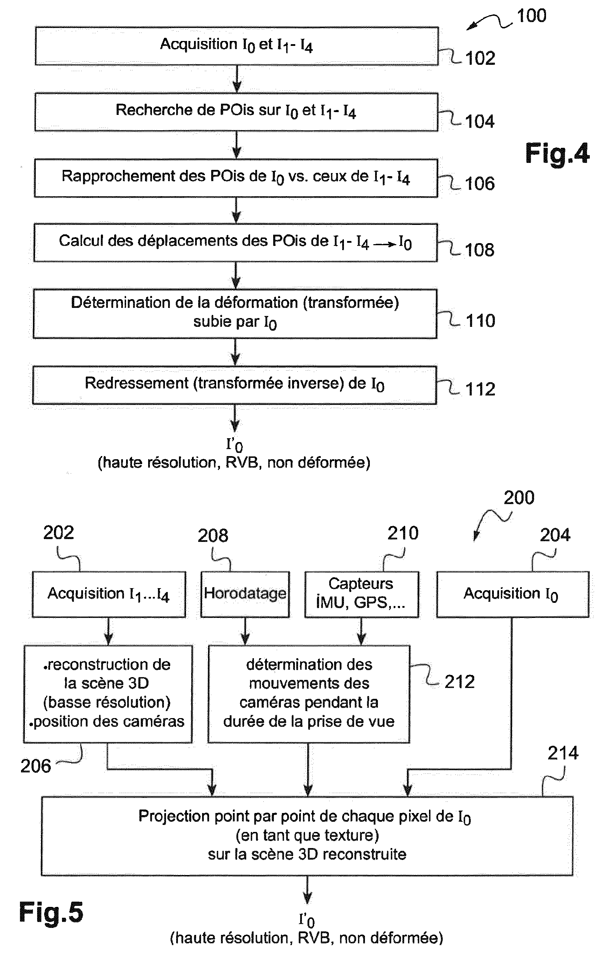

La Figure 4 illustre, sous forme d'un organigramme 100, les différentes étapes d'un premier mode de mise en oeuvre de l'invention.

La première étape (bloc 102) consiste à acquérir les données d'images I₀ et I₁-I₄ capturées simultanément par la caméra *rolling shutter* haute définition 16 et les quatre caméras spectrales *global shutter* 18.

Sur chacune des images le procédé recherche (bloc 104) des points d'intérêt (POI), par exemple au moyen d'un algorithme détecteur de coins de type FAST (*Features from Accelerated Segment Test*).

Comme la caméra haute définition 16 et les quatre caméras spectrales 18 ont leurs axes optiques orientés dans la même direction (sensiblement la direction de la verticale), on considèrera que les images données par les quatre caméras spectrales 18, qui sont les images non déformées de la scène, sont parfaitement alignées, procurant donc quatre estimations de position par point d'intérêt, ce qui permet d'améliorer le résultat final.

On notera également qu'une intégration temporelle, sur plusieurs images, permet d'améliorer sensiblement la correction, en réduisant les effets des artefacts fugitifs n'apparaissant que sur une image isolée.

Une fois les points d'intérêt acquis, le procédé recherche des correspondances (étape 106) entre les POIs de l'image I₀, d'une part, et ceux des images I₁ à I₄, d'autre part, de manière à déterminer ceux des POIs qui sont présents à la fois sur l'image I₀ et sur une ou plusieurs des images I₁ à I₄. Lorsque deux POIs respectifs correspondants sont trouvés sur I₀ et I₁-I₄, ceux-ci sont mémorisés, ainsi que leur position sur chacune des images.

L'étape suivante (bloc 108) consiste à calculer, à partir des données obtenues, le déplacement de chacun des points d'intérêt entre l'image I₁-I₄ (image non déformée) et l'image correspondante I₀ (image déformée).

L'ensemble des déplacements ainsi calculés permet de déterminer (bloc 110), une transformée représentative de la déformation subie par I₀ par rapport aux images I₁-I₄, non déformées.

Il est alors possible (étape 112) d'appliquer à I₀ une transformation inverse de la transformée déterminée à l'étape précédente, de manière à redresser l'image haute résolution, déformée I₀ en une image haute résolution non déformée I'₀.

On notera que l'analyse de l'image haute résolution après correction des distorsions permet, de façon subsidiaire, de déterminer les profondeurs de chaque point d'intérêt par analyse des images successives, c'est-à-dire la composante suivant la direction de l'axe optique entre la caméra et le point d'intérêt sur le terrain (l'axe optique étant l'axe Z dans un repère X,Y,Z lié à la caméra, X et Y étant les coordonnées sur les axes gauche/ droite et haut/bas, par rapport à l'image).

### Second mode de mise en oeuvre de l'invention

La Figure 5 illustre sous forme d'un schéma 200 les différentes étapes d'un second mode de mise en oeuvre de l'invention.

Comme dans le cas précédent, les données d'image I₀ et I₁-I₄ délivrées respectivement par la caméra haute définition 16 et par les quatre caméras spectrales 18 sont acquises de façon simultanée (blocs 202 et 204).

L'étape suivante (bloc 206) consiste à opérer une reconstruction de la scène tridimensionnelle du terrain survolé à partir des images (basse définition) délivrées par les caméras spectrales I₁-I₄. Cette étape peut être mise en oeuvre avec des logiciels tels que *Pix4Dmapper* de la société Pix4D, Lausanne, Suisse.

Cette étape permet d'établir une représentation de la topologie du terrain avec la position des caméras par rapport à celui-ci, pour chaque prise de vue.

Par ailleurs, à partir d'un horodatage précis (bloc 208) des images prises par la caméra *rolling shutter* haute définition 16 et des informations délivrées par les capteurs gyrométriques et/ou de géolocalisation embarqués par le drone (bloc 210), il est possible de déterminer (bloc 212) les mouvements du drone, et donc des caméras, pendant la durée de la prise de vue (bloc 212), en connaissant l'orientation de la caméra pour chaque pixel de l'image.

On opère alors (bloc 214) une projection point-par-point de chaque pixel de l'image I₀ (haute définition, déformée), en tant que texture, sur la scène 3D (basse résolution, non déformée) reconstruite à l'étape précédente (206).

L'application d'une texture (ici l'image déformée obtenue par la caméra *rolling shutter* 16) sur une scène 3D en tant que texture est une étape en elle-même connue, utilisée dans la plupart des logiciels 3D, en particulier celui cité plus haut.

Le résultat de cette projection est l'image I'₀, qui est une image haute résolution RVB redressée des distorsions que présentait l'image I₀.

## Revendications

1. Un bloc caméra (14) apte à être embarqué dans un drone (10), comprenant :
- une caméra de type *rolling shutter* (16) comportant un capteur numérique à une première résolution, haute résolution ; et
- au moins une caméra de type *global shutter* (18) comportant un capteur numérique à une seconde résolution, basse résolution, moindre que ladite première résolution,
la caméra *rolling shutter* et la au moins une caméra *global shutter* ayant leurs axes optiques orientés dans la même direction et étant déclenchables ensemble de manière à recueillir simultanément une image haute résolution (I₀) et au moins une image basse résolution (I₁-I₄) d'une même scène (12) vue par le drone,
**caractérisé en ce qu'**il comprend également :
- des moyens de traitement d'image (22), aptes à :
· déterminer des déformations de type *wobble* présentes dans l'image haute résolution et absentes de la au moins une image basse résolution ; et
· combiner l'image haute résolution (I₀) et la au moins une image basse résolution (I₁-I₄) pour délivrer en sortie une image haute résolution (I'₀) corrigée desdites déformations.

2. Le bloc caméra de la revendication 1, dans lequel les moyens de traitement d'image (22) comprennent des moyens aptes à :
rechercher (104) des points d'intérêt dans l'image haute résolution (I₀) et dans la au moins une image basse résolution (I₁-I₄) ;
mettre en correspondance respective (106) les points d'intérêt de l'image haute résolution et ceux de la au moins une image basse résolution ;
calculer (108) les déplacements respectifs des points d'intérêt de l'image haute résolution par rapport aux points d'intérêt correspondants de la au moins une image basse résolution ;
déterminer (110) une transformation définie par l'ensemble desdits déplacements ; et
appliquer (112) à l'image haute résolution (I₀) une transformation inverse de ladite transformation.

3. Le bloc caméra de la revendication 1, dans lequel les moyens de traitement d'image (22) comprennent des moyens aptes à :
construire (206) une représentation de la scène à partir de la au moins une image basse résolution (I₁-I₄) ;
· déterminer (212) les mouvements du bloc caméra subis pendant la durée du recueil de l'image haute résolution (I₀), à partir de signaux délivrés par des capteurs gyrométriques, accélérométriques et/ou de géolocalisation du drone ;
· projeter point par point (214), en tenant compte desdits mouvements, chaque pixel de l'image haute résolution (I₀) en tant que texture sur ladite représentation de la scène construite à partir de la au moins une image basse résolution (I₁-I₄).

4. Le bloc caméra de la revendication 1, dans lequel la caméra *rolling shutter* (16) est une caméra RVB.

5. Le bloc caméra de la revendication 1, dans lequel la au moins une caméra *global shutter* (18) est une caméra monochrome.

6. Le bloc caméra de la revendication 5, dans lequel la au moins une caméra *global shutter* (18) est un ensemble de quatre caméras spectrales à bande étroite.

7. Le bloc caméra de la revendication 1, dans lequel la résolution du capteur de la caméra *rolling shutter* (16) est d'au moins 12 Mpixel.

8. Le bloc caméra de la revendication 1, dans lequel la résolution du capteur de la au moins une caméra *global shutter* (18) est d'au moins 1 Mpixel.

9. Un procédé de traitement d'image, comprenant :
- l'acquisition (102 ; 204) d'une image (I₀) à une première résolution, haute résolution, délivrée par une caméra de type *rolling shutter* (16) ;
- l'acquisition (102 ; 202) d'au moins une image (I₁-I₄) à une seconde résolution, basse résolution, moindre que ladite première résolution, délivrée par au moins une caméra de type *global shutter* (18) respective, la caméra *rolling shutter* et la au moins une caméra *global shutter* ayant leurs axes optiques orientés dans la même direction et étant déclenchables ensemble de manière à recueillir simultanément ladite image haute résolution (I₀) et ladite au moins une image basse résolution (I₁-I₄) d'une même scène (12) vue par le drone,
**caractérisé en ce qu'**il comprend en outre :
- la détermination de déformations de type *wobble* présentes dans l'image haute résolution et absentes de la au moins une image basse résolution ;
- la combinaison de l'image haute résolution (I₀) et de la au moins une image basse résolution (I₁-I₄) pour délivrer en sortie une image haute résolution corrigée desdites déformations.

10. Le procédé de la revendication 9, comprenant des étapes consistant à :
- rechercher (104) des points d'intérêt dans l'image haute résolution (I₀) et dans la au moins une image basse résolution (I₁-I₄) ;
- mettre en correspondance respective (108) les points d'intérêt de l'image haute résolution et ceux de la au moins une image basse résolution ;
- calculer (110) les déplacements respectifs des points d'intérêt de l'image haute résolution par rapport aux points d'intérêt correspondants de la au moins une image basse résolution ;
- déterminer (110) une transformation définie par à l'ensemble desdits déplacements ; et
- appliquer (112) à l'image haute résolution (I₀) une transformation inverse de ladite transformation.

11. Le procédé de la revendication 9, comprenant des étapes consistant à :
- construire (206) une représentation de la scène à partir de la au moins une image basse résolution (I₁-I₄) ;
- déterminer (212) les mouvements du bloc caméra subis pendant la durée du recueil de l'image haute résolution (I₀), à partir de signaux délivrés par des capteurs gyrométriques, accélérométriques et/ou de géolocalisation du drone ;
- projeter point par point (214), en tenant compte desdits mouvements, chaque pixel de l'image haute résolution (I₀) sur ladite représentation de la scène construite à partir de la au moins une image basse résolution (I₁-I₄).
